# EUROPÄISCHE PATENTSCHRIFT

(11) **EP 1 339 587 B1**
(45) Veröffentlichungstag und Bekanntmachung des Hinweises auf die Patenterteilung: **20.08.2008**
(21) Anmeldenummer: 01989552.3
(22) Anmeldetag: 01.12.2001
(51) Int. Cl.: B60T 13/74, B60T 7/10, B60T 7/12

(54) **VERFAHREN ZUM BETRIEB EINER BREMSANLAGE EINES GEPARKTEN KRAFTFAHRZEUGS**
METHOD FOR OPERATING A BRAKING SYSTEM OF A PARKED MOTOR VEHICLE
PROCEDE POUR FAIRE FONCTIONNER LE SYSTEME DE FREINAGE D'UN VEHICULE EN STATIONNEMENT

(30) Priorität: 08.12.2000 DE 10061064
(43) Veröffentlichungstag der Anmeldung: 03.09.2003
(73) Patentinhaber: Conti Temic microelectronic GmbH, 90411 Nürnberg (DE)
(72) Erfinder: EWINGER, Heinz, 90522 Oberasbach (DE); FARRENKOPF, Armin, 90443 Nürnberg (DE); GROTH, Jürgen, 90453 Nürnberg (DE); JUST, Thomas, 91058 Erlangen (DE)
(86) Internationale Anmeldenummer: PCT/EP2001/014056
(87) Internationale Veröffentlichungsnummer: WO 2002/046016

(56) Entgegenhaltungen:
- WO-A-00/73114
- DE-A- 19 814 657
- DE-A- 19 849 799
- US-A- 5 667 282

## Beschreibung

Die Erfindung betrifft ein Verfahren gemäß dem Oberbegriff des Patentanspruchs 1 wie es aus der DE 198 14 657 A1 oder DE19849799 A1 bekannt ist.

Bei motorangetriebenen Kraftfahrzeugen ist in der Regel eine Feststellbremse zur Arretierung des Kraftfahrzeugs beim Abstellen vorgesehen. Die Bremskraft für die Feststellbremse sollte hierbei nur so groß wie nötig gewählt werden, um einen erhöhten Verschleiß der Bremsanlage zu vermeiden. Aus der eingangs erwähnten gattungsbildenden DE 198 14 657 A1 mit einer Steuer- und/oder Regelvorrichtung für eine elektrische Feststellbremseinrichtung von Fahrzeugen ist es hierzu bekannt, eine Sensoreinheit zum Messen der Neigung der Hanglage des Fahrzeugs vorzusehen; anhand des Sensorsignals dieses Neigungssensors und damit entsprechend der festgestellten Neigung wird die einzustellende Bremskraft der Feststellbremse vorgegeben. Mit dieser-Information allein wird jedoch oftmals die Bremskraft falsch gewählt, da sich die tatsächlich erforderliche Bremskraft auch nach dem Abstellen des Fahrzeugs in Abhängigkeit von fahrzeugspezifischen Gegebenheiten oder äußeren Umständen signifikant ändern kann, bsp. abhängig von der wechselnden Beladung des Fahrzeugs, vom Zustand der Bremsanlage (bsp. durch Verschleiß oder Beschädigungen oder Mängel an der Bremsanlage), durch Einflüsse des Winds oder durch Änderung der Neigung nach dem Abstellen des Fahrzeugs (bsp. beim Abstellen in einer Duplexgarage, auf einem Autotransporter oder einer Fähre etc.). Die falsche Vorgabe der Bremskraft kann kritische, die Sicherheit beeinträchtigende Situationen zur Folge haben, insbesondere kann eine zu geringe Bremskraft zum Wegrollen des Kraftfahrzeugs führen.

Der Erfindung liegt die Aufgabe zugrunde, ein einfaches Verfahren zum Betrieb eines motorangetriebenen Kraftfahrzeugs mit einer hohen Zuverlässigkeit und Sicherheit anzugeben.

Diese Aufgabe wird erfindungsgemäß durch die Merkmale im Kennzeichen des Patentanspruchs 1 gelöst.

Vorteilhafte Ausgestaltungen des Verfahrens sind Bestandteil der weiteren Patentansprüche.

Die Bremskraft für die (elektrische) Feststellbremse wird auch nach dem Abstellen des Kraftfahrzeugs den aktuellen Erfordernissen angepaßt, d.h. die Bremskraft für die Feststellbremse wird auch im abgestellten Zustand des Kraftfahrzeugs entsprechend den tatsächlichen Gegebenheiten vorgegeben. Hierzu wird beim Abstellen des Kraftfahrzeugs ein erster Sollwert als Startwert der Bremskraft für die Feststellbremse anhand bestimmter (fahrzeugspezifischer) Kenngrößen ermittelt, insbesondere anhand der Neigung des Kraftfahrzeugs und/oder der Beladung des Kraftfahrzeugs; im abgestellten Zustand des Kraftfahrzeugs wird dieser Startwert der Bremskraft in jedem Meßvorgang von in bestimmten Zeitabständen aufeinanderfolgenden Meßvorgängen überprüft, indem auf der Grundlage der in den Meßvorgängen für die (fahrzeugspezifischen) Kenngrößen aufgenommenen Meßwerte jeweils ein aktueller Sollwert für die Bremskraft ermittelt wird. Als (fahrzeugspezifische) Kenngrößen werden insbesondere die Geschwindigkeit und/oder die Beschleunigung des Kraftfahrzeugs als Maß für die Bewegung des Kraftfahrzeugs herangezogen sowie die Neigung des Kraftfahrzeugs und die Beladung des Kraftfahrzeugs. Falls der anhand der Meßwerte der (fahrzeugspezifischen) Kenngrößen ermittelte aktuelle Sollwert für die Bremskraft mit dem vorgegebenen Sollwert übereinstimmt, wird die Bremskraft für die (elektrische) Feststellbremse unverändert vorgegeben, insbesondere dann, wenn mit dem vorgegebenen Sollwert für die Bremskraft keine Bewegung des Kraftfahrzeugs stattfindet; falls der anhand der Meßwerte der (fahrzeugspezifischen) Kenngrößen ermittelte aktuelle Sollwert für die Bremskraft vom vorgegebenen Sollwert abweicht, wird die Bremskraft für die (elektrische) Feststellbremse entsprechend angepaßt vorgegeben (erhöht oder erniedrigt), insbesondere wird der Sollwert für die Bremskraft erhöht, wenn mit dem vorgegebenen Sollwert für die Bremskraft eine Bewegung des Kraftfahrzeugs stattfindet. Die Zeitabstände, in der die Meßvorgänge zur Bestimmung der Meßwerte der fahrzeugspezifischen Kenngrößen und damit des Sollwerts für die Bremskraft aufeinanderfolgen, können hierbei beliebig gewählt werden; insbesondere können die Zeitabstände entsprechend dem Verlauf des Sollwerts gewählt werden, insbesondere gemäß dem zeitlichen Verlauf des Sollwerts für die Bremskraft variiert werden: bsp. kann bei einem gleichbleibenden Sollwert für die Bremskraft auch der Zeitabstand zwischen den Meßvorgängen beibehalten werden und bei einer erforderlichen Änderung des Sollwerts für die Bremskraft der Zeitabstand zwischen den Meßvorgängen verkürzt werden. Die in den Meßvorgängen aufgenommenen Meßwerte der fahrzeugspezifischen Kenngrößen werden mittels geeigneter Sensoren gewonnen, insbesondere die Geschwindigkeit und/oder die Beschleunigung des Kraftfahrzeugs als Maß für die Bewegung des Kraftfahrzeugs mittels Raddrehzahlsensoren und/oder Beschleunigungssensoren, die Neigung des Kraftfahrzeugs mittels Neigungssensoren und die Beladung des Kraftfahrzeugs mittels Federwegsensoren oder Belastungssensoren oder Beladungssensoren. Die anhand der fahrzeugspezifischen Kenngrößen vorzugebenden Sollwerte für die Bremskraft können in einem (mehrdimensionalen) Kennfeld oder in einer Kennlinie oder in einer Tabelle gespeichert werden. Die Auswertung der Meßwerte der fahrzeugspezifischen Kenngrößen und die Vorgabe der Sollwerte für die Bremskraft wird durch eine im oder am Kraftfahrzeug angeordnete Steuereinheit vorgenommen, die bsp. in ein Steuergerät des Kraftfahrzeugs integriert werden kann oder bsp. als ein Steuergerät des Kraftfahrzeugs ausgebildet ist.

Eine Überprüfung auf das Abstellen des Kraftfahrzeugs wird durch Auswertung von Kriterien für bestimmte Systemgrößen unter Zuhilfenahme von Plausibilitätsbetrachtungen vorgenommen, bsp. durch Auswertung mindestens eines der Kriterien für folgende Systemgrößen: die Geschwindigkeit des Kraftfahrzeugs (diese muß 0 sein), der Motorzustand des Kraftfahrzeugs (der Motor des Kraftfahrzeugs muß abgestellt bzw. ausgeschaltet sein), der für die Inbetriebnahme des Kraftfahrzeugs verwendete elektronische Schlüssel (dieser ID-Geber oder Authentikations-Geber muß einen bestimmten Code übertragen haben) sowie der Zustand der Türen des Kraftfahrzeugs, insbesondere der Fahrertüre des Kraftfahrzeugs (es muß ein bestimmter Schließzustand/Öffnungszustand vorhanden sein).

Die dem Verfahren zugrundeliegenden Informationen können auf einfache Weise gewonnen werden, insbesondere mittels im Kraftfahrzeug bereits vorhandener Sensoren, so daß vorteilhafterweise die "richtige" Bremskraft für die Feststellbremse nach dem Abstellen des Kraftfahrzeugs auf einfache und kostengünstige Weise vorgegeben wird, ohne daß sich der Bediener des Kraftfahrzeugs hierum kümmern muß. Hierdurch kann die Sicherheit sowie der Komfort für den Bediener des Kraftfahrzeugs erhöht werden, insbesondere ein Wegrollen des Kraftfahrzeugs und ein unnötiger Verschleiß der Feststellbremse vermieden werden.

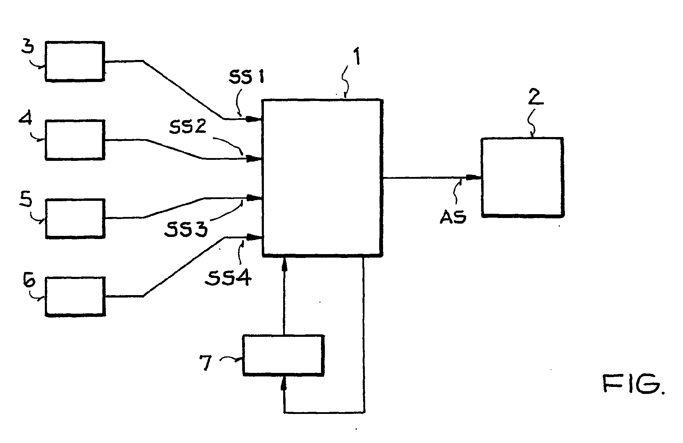

Im Zusammenhang mit der Zeichnung soll die Erfindung weiter erläutert werden, wobei in der Figur ein schematisches Blockschaltbild zur Durchführung des Verfahrens dargestellt ist.

Gemäß der Figur ist eine im Innenbereich oder Außenbereich des Kraftfahrzeugs angeordnete Steuereinheit 1 (Logikeinheit) vorgesehen, die bsp. in ein Steuergerät des Kraftfahrzeugs integriert ist, bsp. in ein an der Hinterachse des Kraftfahrzeugs angeordnetes Steuergerät. Der Steuereinheit 1 (Logikeinheit) werden als Eingangssignale die Sensorsignale SS1, SS2, SS3, SS4 mehrerer Sensoren 3, 4, 5, 6 als Meßwerte zugeführt; durch die Steuereinheit 1 (Logikeinheit) wird in Abhängigkeit der Sensorsignale SS1, SS2, SS3, SS4 die elektrische Bremsanlage 2 des Kraftfahrzeugs mit einem hieraus generierten Ausgangssignal AS (Steuersignal) angesteuert (bsp. durch Beaufschlagung des Bremsaktuators zur Vorgabe-einer bestimmten Bremskraft). Die den Sensorsignalen SS1, SS2, SS3, SS4 zugrundeliegenden Meßwerte geben Aufschluß über mehrere fahrzeugspezifische Kenngrößen, insbesondere über die Bewegung des Kraftfahrzeugs (bzw. den Stillstand des Kraftfahrzeugs) sowie über die Neigung des Kraftfahrzeugs und den Beladungszustand des Kraftfahrzeugs. Als Sensoren zur Erfassung der Meßwerte der fahrzeugspezifischen Kenngrößen sind bsp. an jedem Rad des Kraftfahrzeugs Raddrehzahlsensoren 3 vorgesehen, deren Sensorsignale SS1 als Maß für die Geschwindigkeit des Kraftfahrzeugs und damit für die Bewegung des Kraftfahrzeugs herangezogen werden, ein in einem Steuergerät integrierter oder als separater Sensor ausgebildeter Beschleunigungssensor 4 oder Gierratensensor, dessen Sensorsignal SS2 als Maß für die Beschleunigung des Kraftfahrzeugs herangezogen wird, ein in einem Steuergerät integrierter oder als separater Sensor ausgebildeter Neigungssensor 5, dessen Sensorsignal SS3 als Maß für die Neigung des Kraftfahrzeugs relativ zum Untergrund herangezogen wird sowie ein im Bereich der Hinterachse des Kraftfahrzeugs angeordneter Beladungssensor 6, dessen Sensorsignal SS4 als Maß für den Beladungszustand des Kraftfahrzeugs herangezogen wird.

Die Sensorsignale SS1, SS2, SS3, SS4 der Sensoren 3, 4, 5, 6 und damit die Meßwerte der fahrzeugspezifischen Kenngrößen werden durch die Steuereinheit 1 (Logikeinheit) ausgewertet; durch entsprechende Beaufschlagung des Bremsaktuators der elektrischen Bremsanlage 2 mit dem Ausgangssignal AS der Steuereinheit 1 (Logikeinheit) wird ein bestimmter (aktueller) Sollwert für die (elektrische) Feststellbremse vorgegeben:
- Beim Abstellen des Kraftfahrzeugs wird als Startwert für die Bremskraft der Feststellbremse ein von fahrzeugspezifischen Kenngrößen abhängiger erster Sollwert anhand einem als Funktion dieser fahrzeugspezifischen Kenngrößen vorliegenden Kennfeld oder einer als Funktion dieser fahrzeugspezifischen Kenngrößen vorliegenden Kennlinie oder Tabelle vorgegeben; insbesondere wird der erste Sollwert abhängig von der beim Abstellvorgang vorhandenen Neigung des Kraftfahrzeugs und der beim Abstellvorgang vorhandenen Beladung des Kraftfahrzeugs und damit vom Sensorsignal SS3 des Neigungssensors 5 und vom Sensorsignal SS4 des Beladungssensors 6 anhand einem in der Speichereinheit 7 abgelegten Kennfeld (Bremskraft als Funktion der Neigung und der Beladung) oder anhand einer in der Speichereinheit 7 abgelegten Kennlinie oder Tabelle vorgegeben. Die von den fahrzeugspezifischen Kenngrößen abhängigen Werte des in der Speichereinheit 7 abgelegten Kennfelds oder der in der Speichereinheit 7 abgelegten Kennlinie oder Tabelle können hierbei durch Berechnung generiert oder durch Versuch (empirisch) gewonnen werden.
- Nach dem Abstellen des Kraftfahrzeugs wird der Sollwert für die Bremskraft im abgestellten Zustand verifiziert und ggf. an die tatsächlichen Erfordernisse angepaßt, indem in bestimmten zeitlichen Abständen Meßvorgänge durchgeführt werden (bsp. werden die Meßvorgänge alle 500 ms durchgeführt), in denen anhand der Sensorsignale SS1, SS2 Meßwerte für die Geschwindigkeit und die Beschleunigung des Kraftfahrzeugs sowie anhand der Sensorsignale SS3, SS4 Meßwerte für die Neigung und den Beladungszustand des Kraftfahrzeugs erfaßt werden. Falls die Geschwindigkeit und die Beschleunigung des Kraftfahrzeugs Null ist, wird der vorgegebene Sollwert für die Bremskraft beibehalten; falls dagegen die Geschwindigkeit und/oder die Beschleunigung des Kraftfahrzeugs von Null verschieden ist, wird der Sollwert für die Bremskraft erhöht (bsp. um einen bestimmten prozentualen oder absoluten Betrag, bsp. um 10%), d.h. als aktueller Sollwert für die Bremskraft wird ein gegenüber dem bisher vorgegebenen Sollwert für die Bremskraft erhöhter Wert herangezogen. Falls die Neigung und der Beladungszustand des Kraftfahrzeugs unverändert bleiben, wird der vorgegebene Sollwert für die Bremskraft beibehalten; falls sich dagegen die Neigung oder der Beladungszustand des Kraftfahrzeugs ändern, wird der Sollwert für die Bremskraft angepaßt (bsp. um einen bestimmten prozentualen oder absoluten Betrag erhöht oder erniedrigt, bsp. um 10%). Die auf diese Weise in den Meßvorgängen abhängig von der Neigung und vom Beladungszustand des Kraftfahrzeugs unter Berücksichtigung der Bewegung des Kraftfahrzeugs ermittelten aktuellen Sollwerte für die Bremskraft können der Speichereinheit 7 zugeführt werden, d.h. die Werte des in der Speichereinheit 7 abgelegten Kennfelds oder der in der Speichereinheit 7 abgelegten Kennlinie oder Tabelle werden entsprechend angepaßt, insbesondere zur Vorgabe der Startwerte für die Bremskraft der Feststellbremse beim Abstellen des Kraftfahrzeugs.

## Patentansprüche

1. Verfahren zum Betrieb der Feststellbremse einer elektrischen Bremsanlage (2) eines motorangetriebenen Kraftfahrzeugs, bei dem im abgestellten Zustand des Kraftfahrzeugs Meßwerte mindestens einer fahrzeugspezifischen Kenngröße ermittelt werden,
**dadurch gekennzeichnet, daß** die Meßwerte in Meßvorgängen ermittelt werden, die in einem bestimmten Zeitabstand durchgeführt werden, und daß anhand der in den Meßvorgängen ermittelten Meßwerte der mindestens einen fahrzeugspezifischen Kenngröße ein aktueller Sollwert zur Vorgabe der Bremskraft für die Feststellbremse bestimmt wird.

2. Verfahren nach Anspruch 1, **dadurch gekennzeichnet, daß** als fahrzeugspezifische Kenngrößen die Geschwindigkeit und/oder die Beschleunigung des Kraftfahrzeugs herangezogen werden.

3. Verfahren nach Anspruch 1 oder 2, **dadurch gekennzeichnet, daß** als fahrzeugspezifische Kenngröße die Neigung des Kraftfahrzeugs herangezogen wird.

4. Verfahren nach einem der Ansprüche 1 bis 3, **dadurch gekennzeichnet, daß** als fahrzeugspezifische Kenngröße die Beladung des Kraftfahrzeugs herangezogen wird.

5. Verfahren nach einem der Ansprüche 1 bis 4, **dadurch gekennzeichnet, daß** beim Abstellen des Kraftfahrzeugs ein Startwert als erster Sollwert der Bremskraft für die Feststellbremse vorgegeben wird, und daß zur Bestimmung des Startwerts mindestens eine fahrzeugspezifischen Kenngröße herangezogen wird.

6. Verfahren nach Anspruch 5, **dadurch gekennzeichnet, daß** als fahrzeugspezifische Kenngröße zur Bestimmung des Startwerts der Bremskraft für die Feststellbremse die Neigung des Kraftfahrzeugs herangezogen wird.

7. Verfahren nach Anspruch 5 oder 6, **dadurch gekennzeichnet, daß** als fahrzeugspezifische Kenngröße zur Bestimmung des Startwerts der Bremskraft für die Feststellbremse die Beladung des Kraftfahrzeugs herangezogen wird.

8. Verfahren nach einem der Ansprüche 1 bis 7, **dadurch gekennzeichnet, daß** die Sollwerte für die Bremskraft in einem Kennfeld oder einer Kennlinie oder einer Tabelle gespeichert werden.

9. Verfahren nach Anspruch 8, **dadurch gekennzeichnet, daß** die gespeicherten Sollwerte für die Bremskraft anhand der in den Meßvorgängen bestimmten aktuellen Sollwerte angepaßt werden.

## Claims

1. A method for operating the parking brake of an electric braking system (2) of an engine-driven motor vehicle, wherein when the motor vehicle is in a switched-off state, measurement values of at least one vehicle-specific parameter are determined,
**characterized in that** the measurement values are determined in measuring procedures which are conducted at a specific time interval, and that on the basis of the measurement values determined in the measuring procedures of the at least one vehicle-specific parameter, a current set value is determined in order to define the braking force for the parking brake.

2. A method according to claim 1, **characterized in that** the speed and/or the acceleration of the motor vehicle are used as vehicle-specific parameters.

3. A method according to either of claims 1 or 2, **characterized in that** the inclination of the motor vehicle is used as a vehicle-specific parameter.

4. A method according to any one of claims 1 to 3, **characterized in that** the loading of the motor vehicle is used as a vehicle-specific parameter.

5. A method according to any one of claims 1 to 4, **characterized in that** when switching off the motor vehicle, a start value is specified as a first set value for the braking force for the parking brake, and that in order to determine the start value, at least one vehicle-specific parameter is used.

6. A method according to claim 5, **characterized in that** as a vehicle-specific parameter for determining the start value of the braking force for the parking brake, the inclination of the motor vehicle is used.

7. A method according to either of claims 5 or 6, **characterized in that** the loading of the motor vehicle is used as a vehicle-specific parameter in order to determine the start value of the braking force for the parking brake.

8. A method according to any one of claims 1 to 7, **characterized in that** the set values for the braking force are stored in an engine map or a characteristic curve or a table.

9. A method according to claim 8, **characterized in that** the stored set values for the braking force are adjusted on the basis of the current set values determined in the measuring procedures.

## Revendications

1. Procédé de fonctionnement du frein de stationnement d'un système de freinage électrique (2) d'un véhicule automobile à moteur, dans lequel, dans l'état arrêté du véhicule automobile, des valeurs de mesure d'au moins une grandeur caractéristique spécifique au véhicule sont déterminées,
**caractérisé en ce que** les valeurs de mesure sont déterminées dans des processus de mesurage qui sont effectués dans un intervalle de temps défini, et **en ce que**, à l'aide des valeurs de mesure, déterminées dans les processus de mesurage, de la grandeur caractéristique spécifique au véhicule et au moins au nombre de un, une valeur de consigne actuelle est définie pour paramétrer la force de freinage du frein de stationnement.

2. Procédé selon la revendication 1, **caractérisé en ce que**, en tant que grandeurs caractéristiques spécifiques au véhicule, il est fait appel à la vitesse et/ou à l'accélération du véhicule automobile.

3. Procédé selon la revendication 1 ou 2, **caractérisé en ce que**, en tant que grandeur caractéristique spécifique au véhicule, il est fait appel à l'inclinaison du véhicule automobile.

4. Procédé selon une des revendications 1 à 3, **caractérisé en ce que**, en tant que grandeur caractéristique spécifique au véhicule, il est fait appel au chargement du véhicule automobile.

5. Procédé selon une des revendications 1 à 4, **caractérisé en ce que**, lors de l'arrêt du véhicule automobile, une valeur initiale est définie en tant que première valeur de consigne de la force de freinage du frein de stationnement, et **en ce que**, pour définir la valeur initiale, il est fait appel à au moins une valeur caractéristique spécifique au véhicule.

6. Procédé selon la revendication 5, **caractérisé en ce que**, en tant que valeur caractéristique spécifique au véhicule pour la définition de la valeur initiale de la force de freinage du frein de stationnement, il est fait appel à l'inclinaison du véhicule automobile.

7. Procédé selon la revendication 5 ou 6, **caractérisé en ce que**, en tant que valeur caractéristique spécifique au véhicule pour la définition de la valeur initiale de la force de freinage du frein de stationnement, il est fait appel au chargement du véhicule automobile.

8. Procédé selon une des revendications 1 à 7, **caractérisé en ce que** les valeurs de consigne pour la force de freinage sont enregistrées dans un diagramme caractéristique ou une courbe caractéristique ou un tableau.

9. Procédé selon la revendication 8, **caractérisé en ce que** les valeurs de consigne enregistrées pour la force de freinage sont adaptées à l'aide des valeurs de consigne actuelles définies dans les processus de mesurage.
